# EUROPEAN PATENT SPECIFICATION

(11) **EP 0 796 232 B1**
(45) Date of publication and mention of the grant of the patent: **08.03.2000**
(21) Application number: 95928511.5
(22) Date of filing: 16.08.1995
(51) Int. Cl.: C05F 17/00, C05F 7/00, C05F 9/00

(54) **A METHOD FOR THE TREATMENT OF ORGANIC WASTE AND AN APPARATUS FOR USE IN THE METHOD**
VERFAHREN ZUR BEHANDLUNG VON ORGANISCHEN ABFÄLLEN UND VORRICHTUNG ZUR DURCHFÜHRUNG DES VERFAHRENS
PROCEDE DE TRAITEMENT DE DECHETS ORGANIQUES ET APPAREIL POUR METTRE EN OEUVRE CE PROCEDE

(30) Priority: 16.08.1994 FI 943759
(43) Date of publication of application: 24.09.1997
(73) Proprietor: OY LABKO AB, 36240 Kangasala (FI)
(72) Inventor: OY LABKO AB, 36240 Kangasala (FI)
(74) Representative: Pursiainen, Timo Pekka
(86) International application number: FI9500431
(87) International publication number: WO9605154

(56) References cited:
- EP-A- 0 235 637
- EP-A- 0 665 199
- WO-A-84/02334
- US-A- 4 392 881

## Description

The invention relates to a method for cleaning fluid separation means of a waste container, whereby the waste container is a part of a treatment system of waste presented in the preamble of claim 1. The invention relates further to an apparatus and a waste container for use in the method.

In food industry, organic waste, i.e. animal and vegetable waste, is produced e.g. in connection with slaughtering as well as in the production of bread, fish and meat products. Organic waste is also produced in connection with handling of food at stores, restaurants, catering centres and households.

At the present, waste is primarily handled by collecting all waste produced at the places of origin in the same containers without separating organic waste from other kinds of waste. The containers are emptied at regular intervals, and the waste is transported to dumps. Paper and glass waste are assorted to some extent for recycling, but most of the organic waste is still transported to dumps.

At the places of origin, organic waste is usually stored among miscellaneous waste in ordinary waste containers provided with lids, resulting in the disadvantage that odours are spread to the environment particularly in the summer. Organic waste is loose or in open plastic bags mixed with other kinds of waste, decaying and spoiling also other waste during storage and transportation. At dumps, organic waste contaminates surface and ground water as well as increases the number of various birds, rodents and insects which in turn spread hazardous bacteria to the environment.

Further, separate containers for organic waste have been introduced to some extent, which are emptied at regular intervals and taken to composting stacks or the like provided at dumps. Organic, decomposable waste from households is wrapped in paper and taken to the said collection containers. The waste containers are waste containers provided with lids that can be opened, whereby the odours produced by the waste in them are spread to the environment. The waste containers can also attract rodents and other harmful animals. Organic waste always contains a certain amount of fluid which is not always separated from the solid waste in the collection containers currently in use, whereby also the fluid is transported to the dump. The fluid contained in the organic waste requires an unnecessary collection capacity of the container, whereby the collection containers fill up sooner and must be emptied more often.

European patent application EP-235 637 discloses a method and apparatus for taking care of organic sewage. The method comprises two phases, wherein in the first phase the organic waste is moistened and made homogenous, and in the second phase the waste is separated in a solid and a fluent fraction by means of a centrifuge.

At dumps, organic waste is accumulated in composting stacks which are dampened and prepared when necessary. The composting stacks are open, thus spreading odours to the environment. Furthermore, the open composting stacks attract harmful animals to the dumps.

It has been estimated that approximately one third of all waste at dumps is organic. Transportation of organic waste to dumps involves unnecessary additional costs, consumption of natural resources and a need for increasing dump capacity. Furthermore, part of organic waste is conveyed through sewer systems to sewage treatment plants, causing additional costs and increasing the need for treatment capacity. Yet another part of organic waste is used as animal fodder.

The purpose of the invention is to provide a practical, inexpensive and easy-to-use system for cleaning fluid separation means of a waste container. Furthermore, it is an aim of the invention to provide the containers and apparatus required for using the method. For achieving the above-mentioned aims, the invention is primarily characterized in that the waste outlet and the aeration inlet are placed at different sides of the fluid separation means, wherein the air flowing upon emptying of the storage compartment of the waste container cleans the fluid separation means.

The apparatus for carrying out the method according to this invention can be used for easy and almost odour-free treatment of organic waste. Organic waste is ground in suitably small pieces at the places of origin of the waste, preferably by using mills. The ground waste is led via a flow duct system to a waste container. In connection with the grinding, preferably water can be added to the waste, for facilitating the waste flow. Using the method according to the invention, the fluid separation means of the waste container can be cleaned easily and effectively during the emptying of the waste container. There is no need to pack organic waste and to bring it to a waste container, if the flow duct system is placed in the immediate vicinity of the places of origin of organic waste, such as in kitchens.

In the waste container, at least part of the fluid is separated and led e.g. to a rain water drain or directly to a main sewage system where the fluid flows further to a sewage treatment plant for treatment. The waste container is provided with a sensor indicating the fill-up of the container and being possibly numbered, preferably a capacity sensor. In an advantageous embodiment, a signal sent by the sensor is transmitted by a radio transmitter or the like to a central control room or directly to a waste collection unit, indicating that the quantity of waste has reached a predetermined level in the waste container. On the basis of this information, the waste container can be emptied at a suitable time so that waste containers are not emptied until they are full, and on the other hand, the average filling-up time of each waste container can be monitored. When more information is available, the filling-up of waste containers can be anticipated so that preparations can be made well in advance for emptying waste containers, and waste collecting capacity can be reserved so that load peaks of the waste collecting system can be levelled out.

Collection of organic waste can be automated in an advantageous way by entering the data on the numbered sensor in a computer so that also the location of the container is known. Further, the quality of material contained in the container is known. On the basis of the container volume and an upper limit alarm, the quantity of the material is known. At the stage of emptying the waste container, the waste collection unit enters the data on the emptied waste container in a data collecting unit at the waste collection unit. The data on the waste containers emptied into the waste collection unit is transferred to the central control room at the stage when the waste collection unit is emptied into a humus production unit, whereby the computer at the central control room can send out debit notes to each waste container separately.

The waste collection unit is preferably a tank truck with a sufficiently large and substantially airtight tank for storage of the waste during transportation as well as with a suction apparatus for sucking the waste from the waste container. In an advantageous embodiment, the waste collection unit is provided with a fluid tank for supplying a fluid to the waste container for facilitating suction of organic waste as well as for washing the waste container, if necessary. It is advantageous to provide the tank of the waste collection unit with such dimensions that the contents of several waste containers can be emptied into it. After the tank of the waste collection unit is filled up, it is emptied into a humus production unit, where the waste is turned into humus by decomposition. In another alternative, the waste is conveyed via the flow duct system directly to a humus production unit.

The humus production units can be centrally located so that the collection distance from the surrounding waste containers can be optimised as short as possible, for lower transportation costs. Humus production units according to the present invention can be placed also in urban and suburban areas, since no considerable odours are spread to the environment during the treatment of organic waste, thanks to the substantially airtight treatment.

The waste container unit is emptied preferably by pumping to the upper compartment of the humus production unit, whereby fresh waste lies on the upper compartment of the humus production unit and the finished humus can be removed from the lower compartment. The humus production unit is also provided with a fluid separator for removing the fluid in the fresh waste. Furthermore, the humus production unit comprises the equipment required for maintaining conditions which are advantageous for composting. At least two different methods can be used for producing humus in the humus production unit:
A) Humus tanks are placed in a substantially vertical position, whereby the organic waste supplied to the upper compartment is turned into humus in the lower compartment. The finished humus can be removed from the lower compartment of the humus production unit. A humus tank according to this method is suitable for continuous humus production. If necessary, several parallel humus tanks can be used, thus increasing the waste treatment capacity. The finished humus can be used in gardens, on farms, in cultivated lands and in any fields where soil improvement is needed.
B) Humus tanks are placed in a substantially horizontal position, whereby the system comprises preferably three tanks. In this method, some of the tanks are used for receiving organic waste, some are used for humus production and others are used for storing humus. Receiving tanks are filled with organic waste until the quantity of the waste reaches a predetermined level in the tank, whereby the content of the tank is transferred into a humus production tank. In the humus production tank, the organic waste is turned into humus which is removed into a storage tank. Comprising several tanks, the system according to this method is also suitable for continuous use. This system can be advantageously applied also in places where large quantities of organic waste is produced, such as in industry, restaurants and hotels.

In an advantageous embodiment, the humus production unit is further provided with equipment for supplying e.g. twigs, sawing waste or the like into the humus production unit. The equipment comprises preferably a funnel, a chopper and a motor rotating the chopper. In this way decomposition can still be intensified. If dewatering is used in the humus production unit, the water is drained preferably via a flow duct system into a rain water drain or the like and further to a sewage treatment plant for treatment.

Applying the method presented in the invention gives considerable advantages. Replacement air is entered through the aeration inlet, flowing through the opening system of the fluid separation means and simultaneously cleaning the fluid separation means, e.g. slits or openings of the fluid separation means. Therefore there is no need to wash the fluid separation means after emptying the waste container. In the system according to the invention, the stages of waste treatment constitute a substantially airtight and closed system from the stages of waste grinding to the stage of humus production, whereby no considerable disadvantages due to odours or visual exposure are involved in the treatment of waste. Thus the system according to this method is more convenient to use than the present systems based on open tanks or the like. Using the system according to the method will also stimulate the sorting of other kinds of waste, such as energy waste. Furthermore, it is not necessary to build sewage treatment plants of as high a capacity as is necessary today. Also, the treatment of sewage will be more effective and less expensive. The method according to the invention can be preferably applied in new housing districts and in new industrial plants, whereby the containers can be placed underground or to another suitable place. The apparatus presented in the invention can be applied also in parallel with the present systems for the treatment of waste.

In the following, the invention will be described in more detail with reference to the appended drawings. In the drawings,
- Figure 1A: shows a general schematic view of a waste treatment system according to the invention, provided with a substantially vertical humus production unit,
- Figure 1B: shows a general schematic view of a waste treatment system according to the invention, provided with substantially horizontal tanks in the humus production unit,
- Figure 2: shows an embodiment of the waste container,
- Figure 2A: shows an embodiment of fluid separation means in a waste container shown in Fig. 2, in side view as well as in a vertical cross-section,
- Figure 3: shows an embodiment of a horizontal waste container as seen in a cross-sectional view from the side,
- Figure 4: shows a substantially spherical waste container as seen in a vertical cross-sectional view from the side,
- Figure 5: shows an advantageous embodiment of a waste collection unit seen from the side,

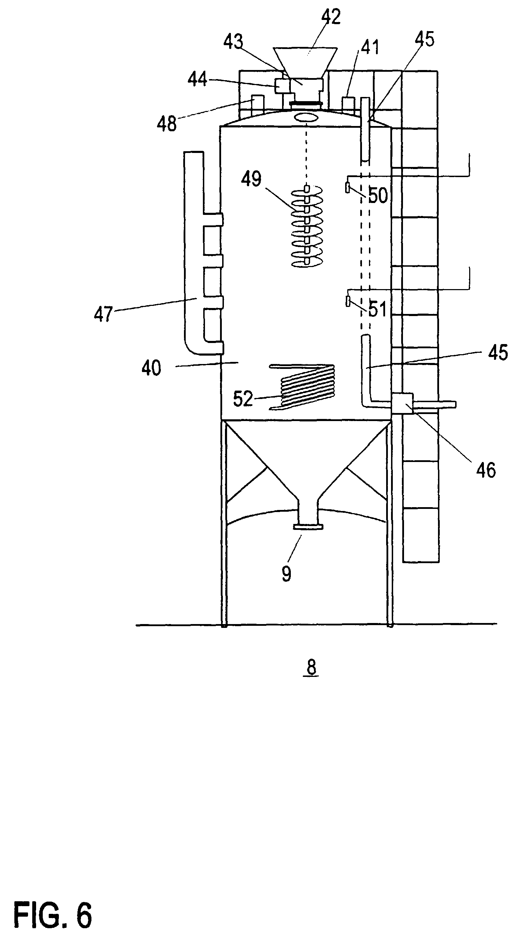

- Figure 6: shows an embodiment of a humus production unit in a vertical cross-sectional view,
- Figure 7: shows an embodiment of a humus production unit comprising substantially horizontal tanks in a schematic view,
- Figure 8: shows a small-scale system applying the method for waste treatment according to the invention,
- Figure 9: shows a small-scale system applying the method for waste treatment according to the invention, placed inside a building,
- Figure 10: shows a second small-scale system applying the method for waste treatment according to the invention, placed inside a building, and
- Figure 11: shows a sewage neutralising system seen in a vertical cross-sectional view from the side.

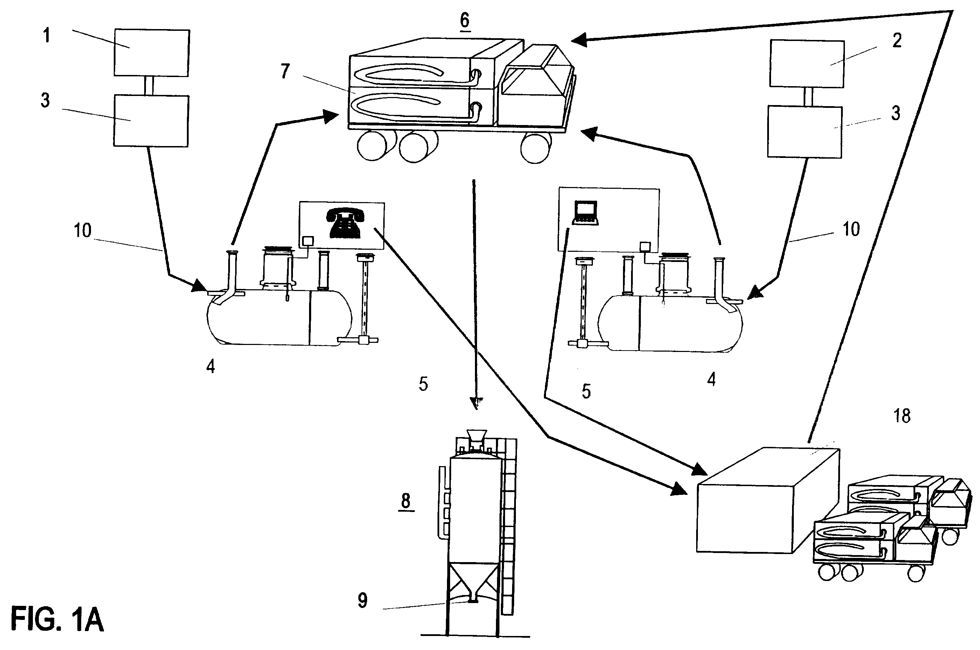

Figure 1A shows an outline on the method according to the invention. Organic waste is produced in a kitchen 1 and at an industrial plant 2 or at corresponding plants. The waste is transferred to a preparing means 3 where the waste is ground to particles of suitable size and conveyed into the waste container 4. The ground waste can be supplied preferably with water for facilitating the flow of the waste in a flow duct system 10 for ground waste. In practice, this can be provided advantageously with a waste grinder placed in connection with a washing basin. In the waste container, at least part of the fluid is removed from the organic waste and conveyed via a sewage flow duct system 5 to a sewage treatment plant for treatment, or, if there is no flow duct system, via filter pipes to the ground. The organic waste is collected by a waste collection unit 6 at regular intervals from the waste containers 4 when they are filled up. When the tank 7 of the waste collection unit 6 is filled up e.g. on a certain collection round, it is emptied at a humus production unit 8. The humus production unit 8 produces humus which is removed via a humus discharge opening 9 at the lower end of the humus production unit 8. The finished humus can be put on market.

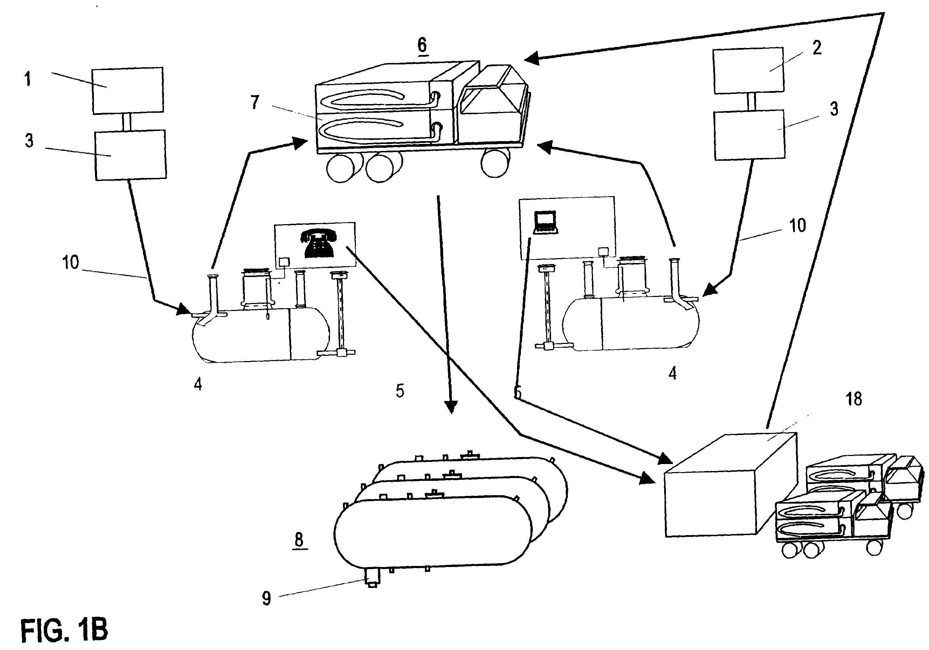

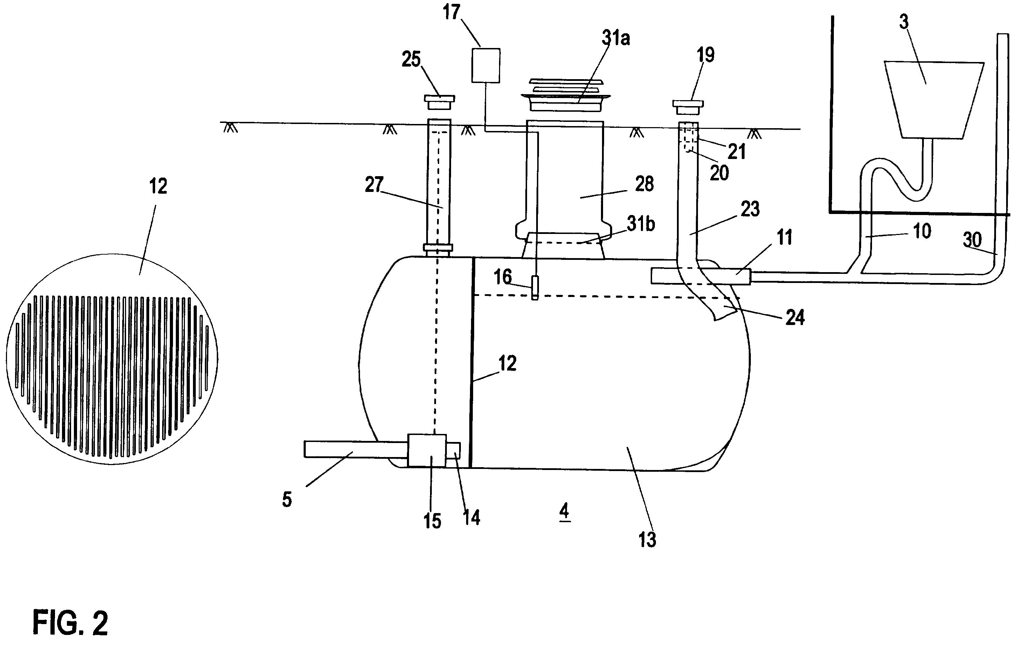

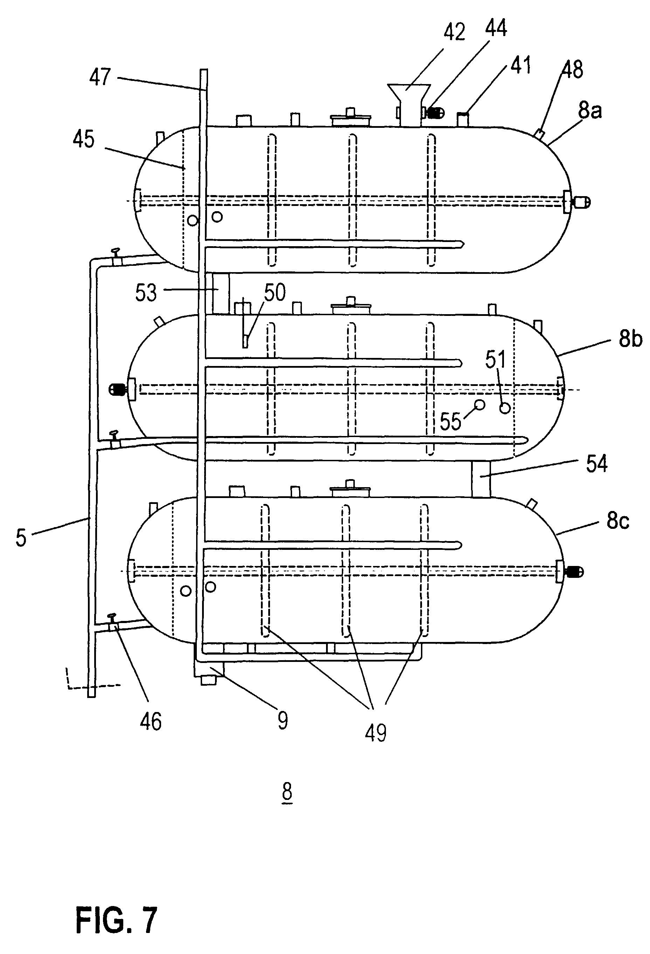

Figure 1B shows an outline of the method according to the invention when horizontal humus production units are applied. The method has a general outline similar to that shown in Fig. 1A. As a difference, this method uses humus production units 8a, 8b placed substantially in a horizontal position so that some of these tanks are used as receiving tanks and some as humus production tanks. The tank 7 of the waste collection unit is emptied into the tank 8a used as the receiving tank of the humus production unit. When this receiving tank of the humus production unit is filled up, humus production is started in the tank. When the humus is finished, the tank 8b used as a humus production tank is emptied, whereafter the humus production tank is used as a receiving tank again. The tanks are shown in more detail in Fig. 7.

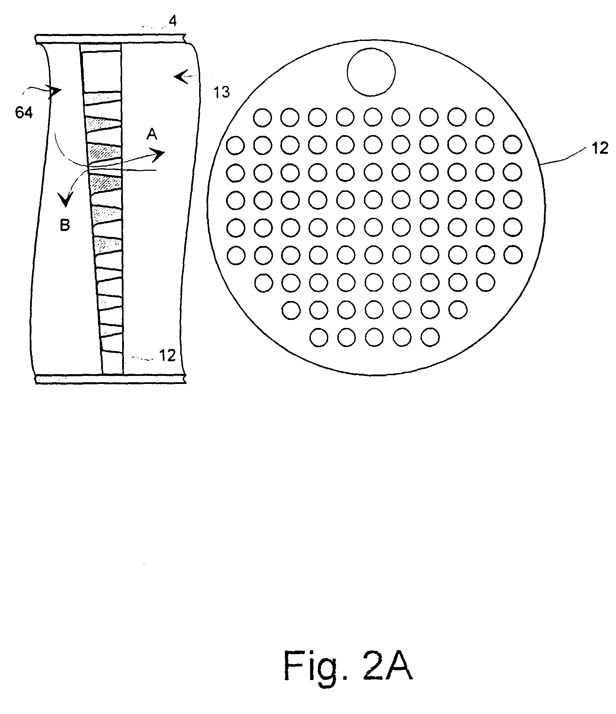

Figure 2 shows the construction of an underground waste container 4 in detail. Waste is ground in small particle size by a preparing means 3 and is led via a flow duct system 10 for ground waste through a waste inlet 11 to the storage compartment 13 of the waste container. A fluid separation means 12 is arranged between the storage compartment 13 and the fluid compartment 64 in the waste container 4 and provided with an opening system for separating fluid from the ground waste and leading it to the fluid compartment 64. The fluid separation means 12 is a wall, made preferably of resin by casting or by a corresponding method and having the shape of the cross-sectional form of the waste container, with a thickness preferably smaller at the bottom than at the top of the waste container 4. Further, the opening system formed in the wall comprises openings having substantially a shape of a truncated cone through the wall so that the diameter of the openings is greater on the surface of wall at the side of the storage compartment 13 of the waste container than on the surface of the wall at the side of the fluid compartment 64. Thus when fluid is discharged through the opening (arrow A in Fig. 2A), the waste passing with the fluid forms a plug in the opening, preventing waste from flowing through the opening. Separation means 12 of this kind are illustrated in Fig. 2A seen from the side and in a vertical cross-sectional view.

It is advantageous to form the opening system so that at least on the surface of the wall at the side of the fluid compartment 64, the openings are larger at the fluid separation means 12 in the bottom part than in the upper part of the waste container 4, wherein the suction used for emptying the storage compartment 13 of the waste container (arrow B in Fig. 2A) cleans substantially the whole opening system of the fluid separation means 12.

The opening system of the fluid separation means 12 can also be formed by using a plate with narrow horizontal or vertical slits.

The waste is accumulated in the storage compartment 13 of the waste container, and the fluid rises on the upper surface of the accumulated waste, from where the fluid is separated through the opening system of the fluid separation means 12 and flows further via a sewage outlet 14 into the sewage flow duct system 5. The fluid flow between the sewage outlet 14 and the sewage flow duct system 5 as well as the fluid surface level in the fluid compartment 64 can be regulated by a flow control means 15. When the surface of the waste in the storage compartment 13 of the waste container reaches the level of the fill-up sensor 16, the fill-up sensor 16 gives a signal which is transmitted further via a data transfer means 17, preferably a radio transmitter, to the central control room 18 (Figs. 1A and 1B) or directly to the waste collection unit 6.

Furthermore, the upper section of the fluid separation means 12 can be provided with an overflow prevention outlet for preventing overflow of the waste container 4.

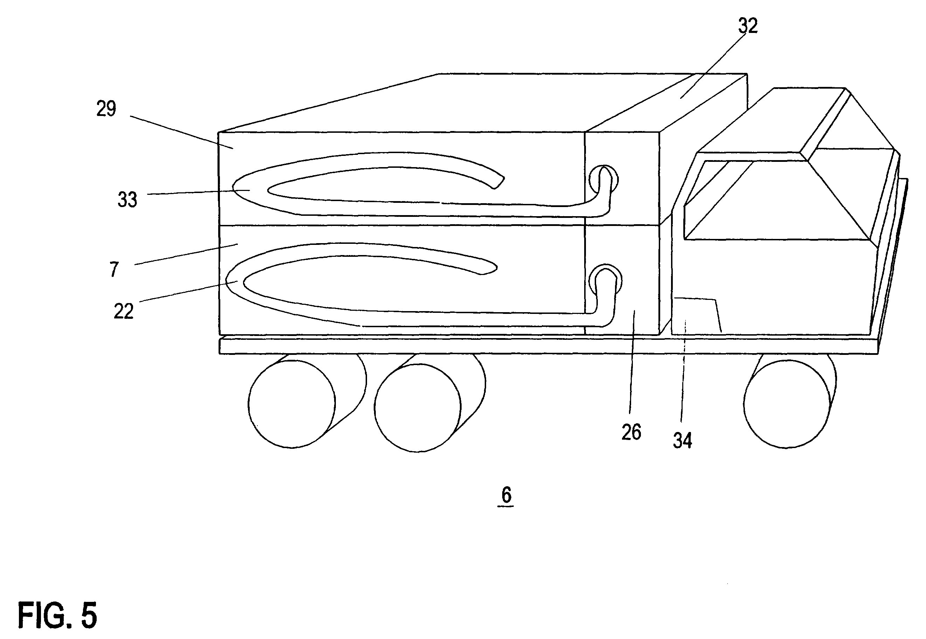

The waste container 4 is emptied by removing the lid 19 of the waste outlet on the ground and by inserting a gasket opening means 20 through a gasket 21 so that a suction hose 22 of the waste collection unit 6 (Fig. 5) can be penetrated through the gasket opening means 20 and the waste outlet 23 into the storage compartment 13 of the waste container. The gasket 21 prevents the gas contained in the waste container 4 from being spread into the open air during emptying the waste container 4. Inside the waste container 4, there is a suction hose guide 24 for guiding the suction hose 22 preferably towards the end of the storage compartment 13 of the waste container. The lid 25 of the aeration inlet on the ground is opened, and the suction apparatus 26 of the waste collection unit is started (Fig. 5). During suction, the suction hose 22 of the waste collection unit is drawn by the suction effect towards the bottom of the storage compartment 13 of the waste container, whereby the storage compartment of the waste container can be emptied almost completely. Upon emptying of the waste container, replacement air is entered through the aeration inlet 27, flowing through the opening system of the fluid separation means 12 and simultaneously cleaning the slits. Replacement air is used to prevent a negative pressure from developing inside the waste container 4 during emptying. If necessary, fluid can be supplied to the waste container via a maintenance duct 28 for facilitating the suction of the waste. A fluid tank 29 is supplied preferably with the waste collection unit 6. Furthermore, the waste container 4 is provided with a ventilation duct system 30. It is led in an airtight manner to a ventilation outlet system, whereby odours are not considerably spread into the environment. If necessary, the waste container 4 can be maintained via the maintenance duct 28. The maintenance duct 28 is normally closed by a lid 31a on the ground and by an intermediate lid 31b.

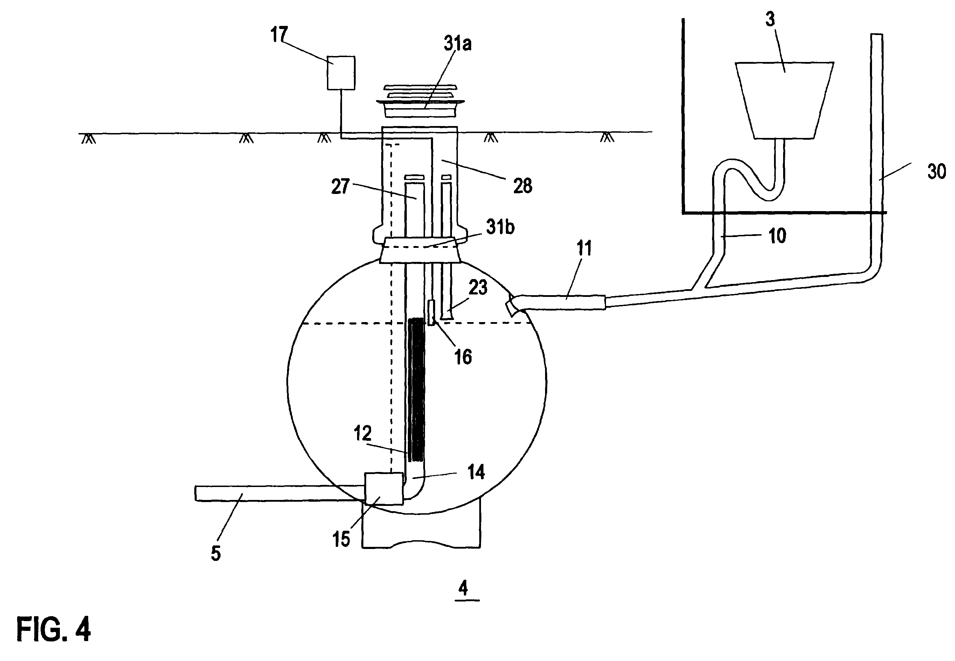

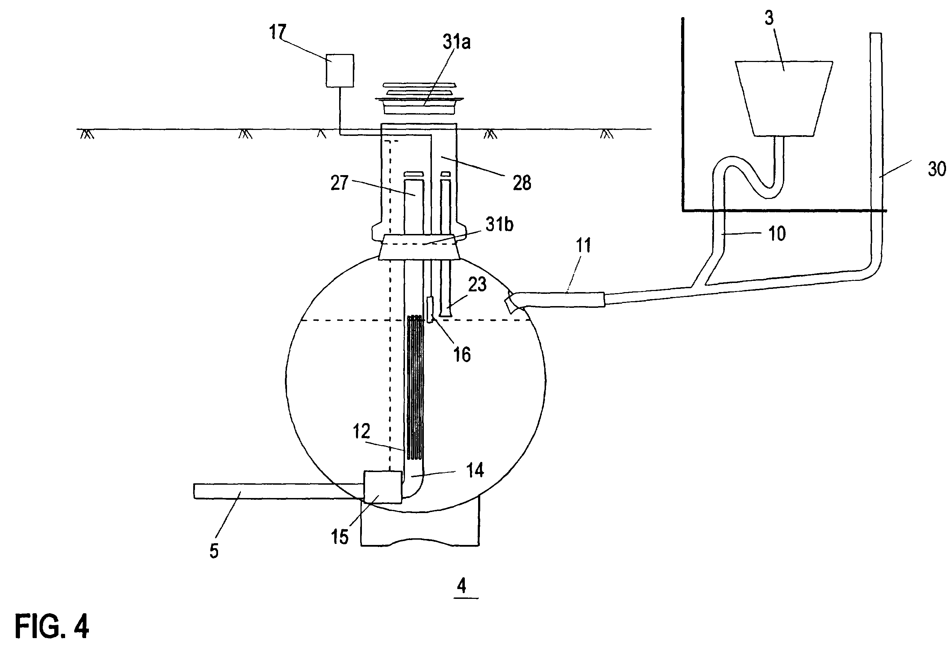

A second advantageous embodiment of the waste container is shown in Fig. 3. The waste container 4 is here substantially in a vertical position. The waste container 4 can also have a spherical shape, as shown in Fig. 4. The waste container is provided with a preparing means 3, a flow duct system 10 for ground waste, a waste inlet 11 and a ventilation duct system 30, as in Fig. 2. The fluid separation means 12 is, in this embodiment, preferably a pipe provided with narrow slits for leading the fluid into the sewage outlet 14. In this embodiment, the waste outlet 23 is placed in the maintenance duct 28. The top of the fluid separation means 12 is arranged to extend to the maintenance duct 28, forming an aeration inlet for supplying replacement air to the waste container 4 when it is being emptied. The waste outlet 23 and the top of the fluid separation means 12 are conveyed through the intermediate lid 31b substantially in an airtight manner. Also this embodiment comprises a fill-up sensor 16 and a data transfer means 17 for informing about the filling up of the container to the central control room 18 or to the waste collection unit 6.

Figure 5 shows one embodiment of the waste collection unit 6 which is placed e.g. on the chassis of a truck. The waste to be collected is sucked by means of a suction hose 22 of the waste collection unit 6 to the waste collection tank 7. The suction is controlled by the suction apparatus 26 of the waste collection unit. Further, the waste collection unit 6 can comprise a fluid tank 29, from which a fluid pumping device 32 pumps fluid via a fluid supply hose 33 into the waste container 4 during its emptying or washing, if necessary. Information on filling up of the waste container is transmitted to the waste collection unit preferably by means of a data transfer means 34 of the waste collection unit.

The humus production unit 8 comprises a preferably vertical humus tank 40 into which the waste to be composted is led from the waste collection unit via a waste supply inlet 41. Also other kinds of waste, such as wood chips or twigs, can be supplied into the humus production unit through a funnel 42 and a chopper 43. The chopper is operated by a motor 44. The humus tank 40 comprises also a fluid outlet system 45 through which excess fluid is removed from the waste to be composted if necessary. The fluid outlet system 45 is preferably a vertical, fluid-permeable tube whose lower part is connected with a suitably shaped, impermeable tube. Dewatering can be regulated by a fluid discharge control means 46. The fluid to be removed can be advantageously led to the sewage flow duct system 5. Also an aeration duct system 47 can be used for maintaining conditions suitable for composting and, if necessary, for supplying bacteria and other substances accelerating decomposition. For composting, also a gas outlet system 48 connected with the humus tank 40 is required for collection of gas. For ensuring even and quick decomposition, the humus production unit can also be provided with a mixing means 49, preferably a helical coil, which is rotated with an advantageous actuator, such as a motor. The finished humus can be removed via the humus outlet 9 at the bottom of the humus tank 40.

In an advantageous embodiment, the humus production unit 8 can be provided with a humus fill-up sensor 50 giving a signal when the surface of the humus and waste mass reaches a predetermined level in the humus tank. The humus production unit can also be supplied with a moisture sensor 51 indicating the water content of the humus and waste mass as well as a pH sensor 55. On the basis of the data from these sensors, the degree of decomposition of the waste can be deduced, whereby the necessary corrections can be made in the humus production. Further, the humus tank can be provided with a heating means 52 for heating the waste in the humus tank, thus accelerating the decomposition process.

Figure 7 shows one constructional embodiment of the humus production unit 8 comprising several horizontal tanks. The humus production unit 8 consists of three tanks 8a, 8b, 8c, the first one 8a being used as a receiving tank for organic waste; decomposition of the waste is started in this tank. The second tank 8b is used as the actual humus production tank, and the third tank 8c is used as a storage tank for final decomposition as well as for temporary storage of finished humus. The method is applied by filling the receiving tank 8a with organic waste. When the tank is filled up, the waste is transferred via a receiving tank outlet 53 to a humus production tank 8b, in which the organic waste is decomposed into humus. When the humus production tank is filled up, it is emptied via a humus production tank outlet 54 to a storage tank 8c. The finished humus can be removed via a humus outlet 9. The system can be applied also by using several tanks, each being in turn used as a receiving, humus production and storage tank. In this case the first tank 8a is filled with organic waste until the surface of the waste reaches a predetermined level in the container, whereby the tank is turned into a humus production tank and a second tank 8b is used as a receiving tank for organic waste. When the organic waste is turned into humus in the first tank, the humus can be removed from the tank via an outlet, whereby the tank is used again as a receiving tank for organic waste. In a corresponding manner, when the organic waste in the second tank reaches a predetermined level, this tank is turned into a humus production tank and the next empty tank is used as a receiving tank for organic waste. Also in this embodiment, it is possible to use a fill-up sensor 50, a moisture sensor 51 and a pH sensor 55.

The system applying the method of the invention can be also automated e.g. by allotting an identification code to each waste container 4 in the system. Thus when the waste container 4 is filled up, the identification code of the said container is transmitted to the central control room 18 of the system and possibly to the waste collection unit 6. On the basis of the identification code, the location, size and quality of waste mass of the waste container 4 can be traced. The data is stored in the waste collection unit 6, whereby the route of the waste collection unit 6 can be optimised preferably according to the capacity of the waste collection unit 6. When the waste collection unit 6 is emptied into the humus production unit 8, the data on the emptied waste containers is transferred to the central control room. On the basis of the data, the waste collecting and treatment costs can be divided according to individual waste containers, whereby also invoicing can be automated.

Furthermore, the operation of the humus production unit 8 can be automated, whereby the automation system monitors the measuring results given by the sensors placed in the humus production unit 8. When a humus fill-up sensor indicates that a container is filled up with organic waste, the actual humus production is started. The degree of decomposition is monitored preferably by measurements on the temperature, conductivity, pH value and moisture content. A limit value describing the level in finished humus can be defined for each measurement, whereby it can be deduced on the basis of said measuring results whether the humus is finished, so that the decomposition process can be stopped and the humus production unit 8 be emptied.

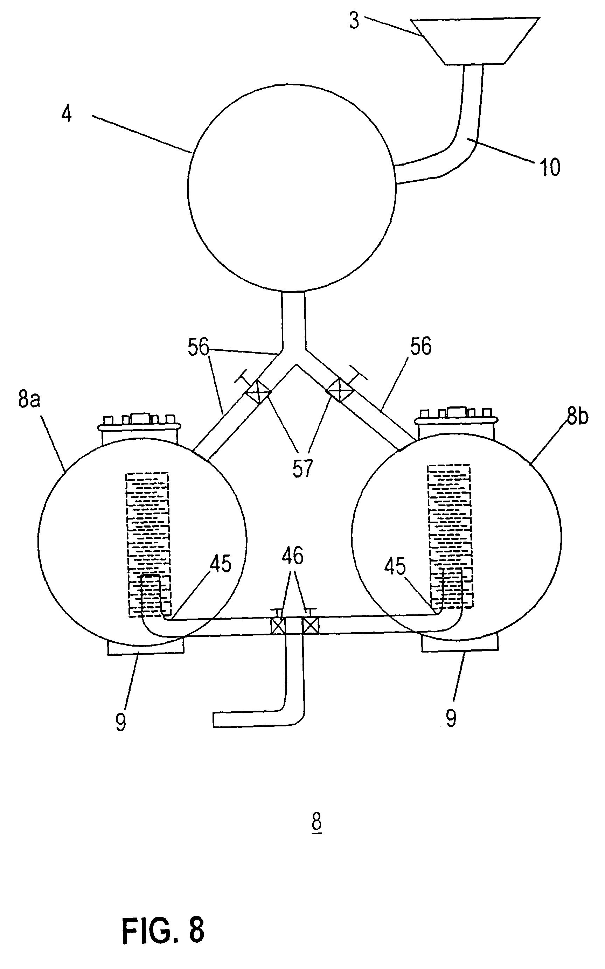

Figure 8 shows a small-scale system applying the method according to the invention. It comprises a waste container 4, a flow duct system 10 provided also with a preparing means 3, as well as a humus production unit 8 having tanks 8a, 8b, in which the organic waste is transferred for decomposition. The waste container 4 and the tanks 8a, 8b of the humus production unit are connected to each other by a suitable flow duct system 56 and guide means 57. The ground organic waste coming from the preparing means 3 is transferred via the flow duct system 10 to the waste container 4. When the waste container 4 is filled up, the organic waste is transferred via the flow duct system 56 into the tanks 8a, 8b of the humus production unit, where the organic waste is decomposed. The finished humus can be removed via a humus outlet 9. The tanks 8a, 8b are also provided with a fluid outlet system 45, equipped with a suitable opening system and provided for discharging excess fluid from the organic waste to be treated, as well as a mixing means 49. The system can also be used in a manner that each tank 8a, 8b is used in turn both as a receiving tank and a humus production tank so that when the receiving tank is filled up, it is turned into a humus production tank and a free tank is turned into a receiving tank. The system illustrated in Fig. 8 is best suited for places where relatively large quantities of organic waste is produced. Also in areas of scattered settlement, the system shown in Fig. 8 is an advantageous alternative for the treatment of organic waste.

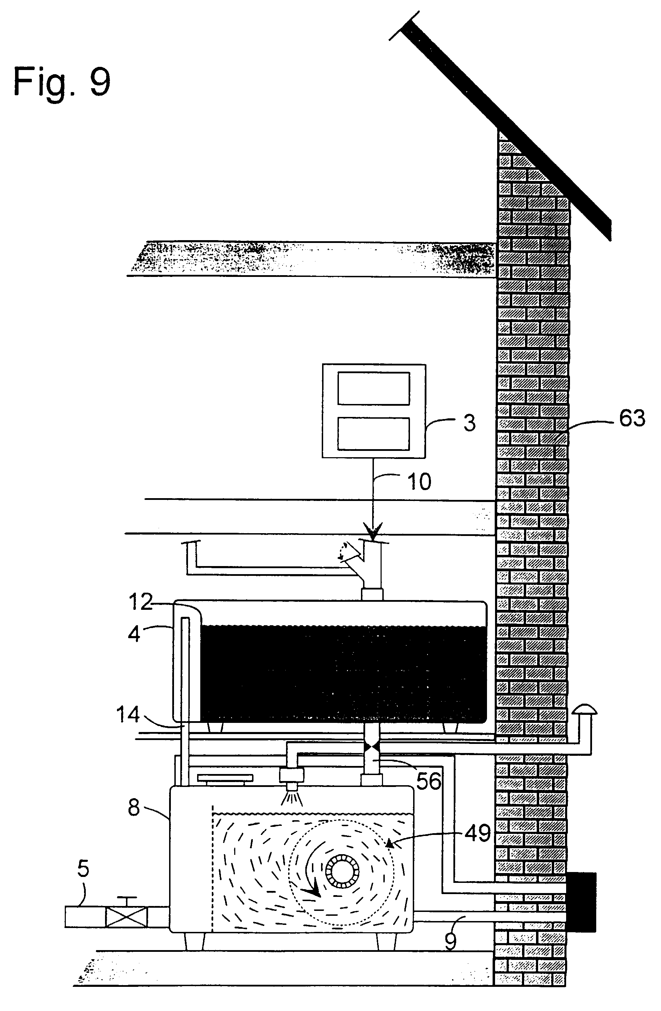

Figure 9 shows a small-scale system applying the method according to the invention, placed inside a building 63. The building can comprise one or several preparing means 3 for organic waste, placed e.g. in connection with the kitchen sink of each apartment. The ground organic waste is led from the preparing means 3 via a flow duct system 10 to a waste container 4. The waste container 4 includes, as described above in connection with other embodiments, fluid separation means 12 and a sewage outlet 14. When the waste container 4 is filled up, the organic waste is transferred via the flow duct system 56 to the tank 8 of the humus production unit, where the organic waste is decomposed into humus. The finished humus can be removed via a humus outlet 9. The figure also shows an aeration duct system 47 facilitating the maintenance of conditions required for decomposition. For ensuring more even and quicker composting, the humus production unit can also be supplied with a mixing means 49 which is rotated with an advantageous actuator, such as a motor, if necessary.

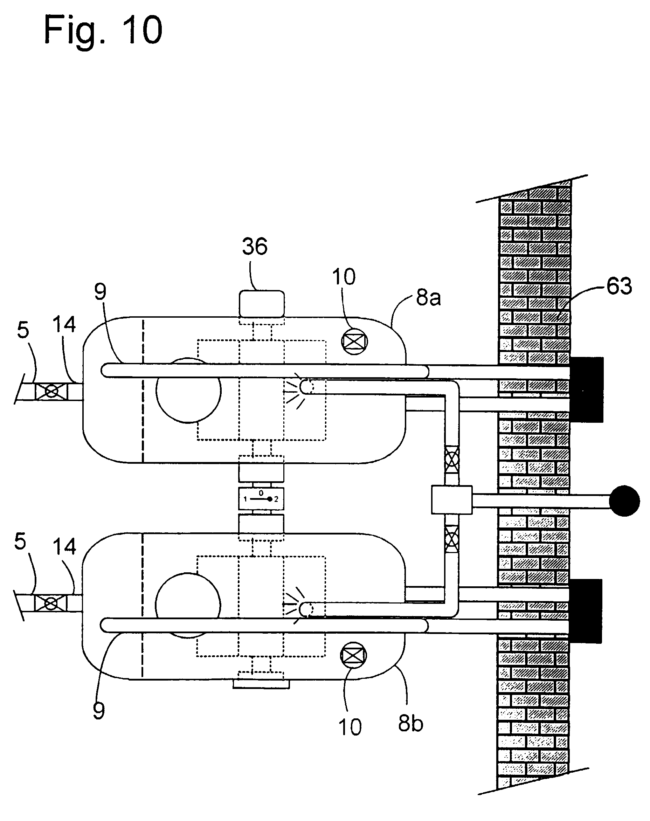

Figure 10 shows a second small-scale system applying the method according to the invention, placed inside a building 63. The difference to the embodiment shown in Fig. 9 is here primarily the fact that each tank 8a, 8b can be used both as a receiving tank for organic waste and as a humus production tank. Thus each tank is used in turn as a receiving tank and a humus production tank so that when the receiving tank is filled up, it is turned into a humus production tank and the free tank is turned into a receiving tank, as also presented in connection with the description of Fig. 8.

The apparatuses shown in Figs. 9 and 10 are heat-insulated and can be placed also outdoors.

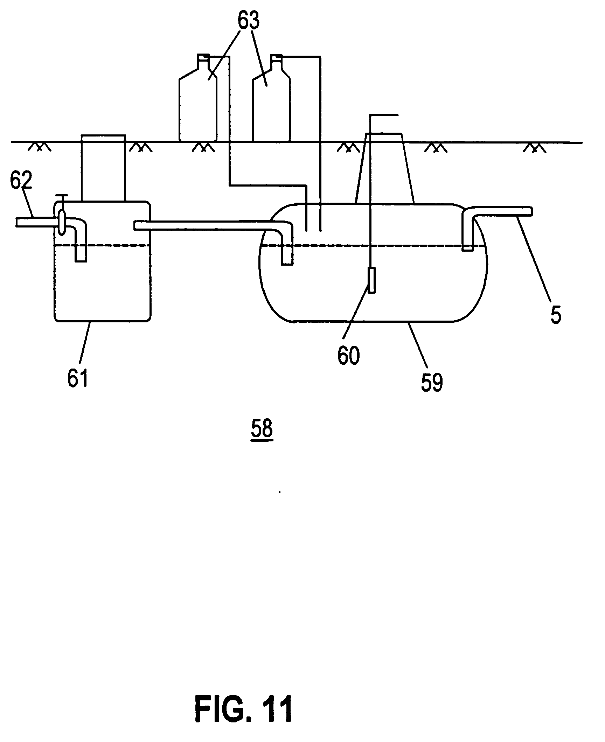

Furthermore, the system applying the method according to the invention can be equipped with a sewage neutralisation system 58 as illustrated in Fig. 11. Its purpose is to bring the pH value of the fluid separated in the waste container close to neutral, so that the neutralised sewage can be led to a sewage treatment plant. The fluid separated in the waste container 4 is led via a sewage flow duct system 5 to a neutralisation tank 59. The neutralisation tank 59 is equipped with detector means 60 for measuring the pH value of the sewage. On the basis of data received from the detector means 60, suitable chemicals can be added into the neutralisation tank 59 for neutralisation of the sewage. In Fig. 11, tanks containing neutralising chemicals are indicated by the reference number 63. The neutralised sewage is conveyed to a sampling tank 61 where the pH value of the neutralised sewage can be controlled. From the sampling tank 61, the neutralised sewage is conveyed further, either via a neutralised sewage flow duct system 62 to a sewage treatment plant for treatment or, if no such system 62 is available, via filter pipes to the ground.

## Claims

1. A method for the treatment of waste, using waste containers (4) that are emptied at regular intervals and humus production units (8) into which the waste is transferred, in which method
- the waste is accumulated into a storage compartment (13) in the waste container by leading it via a flow duct system (10),
- at least part of the fluid, such as water, contained in the waste is separated in the storage compartment (13) of the waste container by using fluid separation means (12) for leading the fluid into a fluid compartment (64), and
- the contents of the storage compartment (13) of the waste container are removed at regular intervals to be led through a waste outlet (23) into the humus production unit (8), wherein upon emptying, replacement air is entered during aeration inlet (27) into the waste container (4),
wherein decomposition of the waste is started advantageously in the storage compartment (13) of the waste container, **characterized** in that the waste outlet (23) and the aeration inlet (27) are placed at different sides of the fluid separation means, wherein the air flowing upon emptying of the storage compartment (13) of the waste container cleans the fluid separation means (12).

2. A method according to the claim 1, **characterized** in that the waste container (4) can be used as a humus production unit (8), and the humus production unit (8) can be used as a waste container (4).

3. An apparatus for applying the method according to claim 1, which apparatus comprises at least one waste container (4) to be emptied at regular intervals and at least one humus production unit (8), the waste being arranged to be accumulated into the storage compartment (13) of the waste container, wherein at least the waste container (4) comprises fluid separation means (12), a fluid compartment (64), a sewage outlet (14), a waste outlet (23) and an aeration inlet (27), and/or the humus production unit (8) comprises a fluid outlet system (45) for separation and discharge of fluid, **characterized** in that the waste outlet (23) and the aeration inlet (27) are arranged to be placed at different sides of the fluid separation means, wherein the air flowing upon emptying of the storage compartment (13) of the waste container cleans the fluid separation means (12).

4. An apparatus according to claim 3, **characterized** in that the apparatus comprises a waste collection unit, wherein
- the storage compartment (13) of the waste container is arranged to be emptied at regular intervals into the waste collection unit (6), and
- the waste collection unit (6) is arranged to be emptied at regular intervals into the humus production unit (8).

5. An apparatus according to claim 5, **characterized** in that the waste container (4), the waste collection unit (6) and the humus production unit (8) are arranged as substantially airtight constructions.

6. An apparatus according to claim 3 or 5, **characterized** in that the waste container (4), the waste collection unit (6) and the humus production unit (8) are arranged to be placed inside a building.

7. An apparatus according to any of the claims 3 to 6, where the waste container (4) is arranged to be emptied through a suction hose (22), **characterized** in that the waste container (4) comprises a suction hose guide (24) for guiding the suction hose (22) preferably towards the end of the storage compartment (13) of the waste container during emptying the waste container (4), wherein the storage compartment (13) of the waste container can be emptied almost completely.

8. An apparatus according to claim 4, **characterized** in that the waste collection unit (6) is provided with a substantially airtight tank (7) and emptying means (22, 26) for emptying the waste container by suction.

9. A waste conteiner (4), which comprises fluid separation means (12), a fluid compartment (64), a sewage output (14), a waste outlet (23) and an aeration inlet (27), **characterized** in that the waste outlet (23) and the aeration inlet (27) are arranged to be placed at different sides of the fluid separation means, wherein the air flowing upon emptying of the storage compartment (13) of the waste container cleans the fluid separation means (12).

10. An apparatus according to claim 3 or 4, or a waste container (4) according to claim (9) ,**characterized** in that the storage compartment (13) of the waste container (4) is provided with a sensor (16) for monitoring the filling up of the storage compartment of the waste container to a predetermined level, wherein it is known as such that the sensor is equipped preferably with a radio transmitter system for informing the waste collection unit (6) about the filling up of the waste container (4) and the location of the waste container (4).

## Patentansprüche

1. Verfahren zur Behandlung von Abfall durch Verwendung von Abfallbehältern (4), die in regelmässigen Intervallen geleert werden und durch Humus erzeugende Einrichtungen (8), zu welchen der Abfall zugeführt wird, bei welchem Verfahren
- der Abfall in einem Lagerraum (13) im Abfallbehälter dadurch gesammelt wird, dass er über ein Strömungskanalsystem (10) geleitet,
- mindestens ein Teil der Flüssigkeit, wie z.B. Wasser, die im Abfall enthalten ist, im Lagerraum (13) durch Verwendung einer Abscheidvorrichtung (12) zur Leitung der Flüssigkeit in eine Fluidkammer (64) abgeschieden wird, und
- der Inhalt des Lagerraumes (13) des Abfallbehälters in regelmässigen Intervallen entfernt und durch einen Abfallauslass (23) in die Humus erzeugende Einrichtung (8) geleitet wird, in welche beim Entleeren, Ersatzluft durch einen Belüftungseinlass (27) in den Abfallbehälter (4) eingeführt wird,
wobei der Abbau des Abfalls vorzugsweise im Lagerraum (13) des Abfallbehälters (4) anfängt, dadurch gekennzeichnet, dass der Abfallauslass (23) und der Belüftungseinlass (27) auf unterschiedlichen Seiten der Flüssikeitsabscheidvorrichtung angeordnet sind, wobei die beim Entleeren des Abfalls aus dem Lagerraum (13) strömende Luft die Abscheidvorrichtung (12) für die Flüssigkeit reinigt.

2. Verfahren nach Anspruch 1, dadurch gekennzeichnet, dass der Abfallbehälter (4) als Humus erzeugende Einrichtung verwendbar ist, und die Humus erzeugende Einrichtung auch als Abfallbehälter (4) verwendbar ist.

3. Vorrichtung zur Durchführung des Verfahrens nach Anspruch 1, mit mindestens einem Abfallbehälter (4), der in regelmässigen Intervallen zu entleeren ist, und mindestens einer Humus erzeugende Einrichtung (8), wobei der Abfall für Aufnahme im Lagerraum (13) vorgesehen ist, und wobei mindestens der Abfallbehälter (4) eine Flüssigkeitsabscheideinrichtung (12), eine Fluidkammer (64), einen Abwasserauslass (14), einen Abfallauslass (23) und einen Belüftungseinlass (27) umfasst, und/oder die Humus erzeugende Einrichtung (6) ein Flüssigkeitsauslasssystem (45) zum Abscheiden und zur Abgabe von Flüssigkeit aufweist, dadurch gekennzeichnet, dass der Abfallauslass (23) und der Belüftungseinlass (27) an unterschiedlichen Seiten der Flüssikeitsabscheideinrichtung angeordnet sind, wobei die Luftströmung beim Entleeren des Lagerraumes (13) des Abfallbehälters die Abscheidvorrichtung (12) reinigt.

4. Vorrichtung nach Anspruch 3, dadurch gekennzeichnet, dass sie eine Abfallsammeleinrichtung einschliesst, in welcher der Lagerraum (13) des Abfallbehälters für Entleerung in regelmässigen Intervallen in die Abfallsammeleinrichtung (6), und die Abfallsammeleinrichtung (6) für eine Entleerung in regelmässigen Intervallen in die Humus erzeugende Einrichtung (8) vorgesehen sind.

5. Vorrichtung nach Anspruch 5, dadurch gekennzeichnet, dass der Abfallbehälter (4), die Abfallsammeleinrichtung (6) und die Humus erzeugende Einrichtung (8) als luftdichte Konstruktionen ausgebildet sind.

6. Vorrichtung nach Anspruch 3 oder 5, dadurch gekennzeichnet, dass der Abfallbehälter (4), die Abfallsammeleinrichtung (6) und die Humus erzeugende Einrichtung (8) für Aufstellung innerhalb eines Gebäudes vorgesehen sind.

7. Vorrichtung nach einem der Ansprüche 3 bis 6, in welcher der Abfallbehälter (4) für eine Entleerung durch einen Saugschlauch (22) vorgesehen ist, dadurch gekennzeichnet, dass der Abfallbehälter (4) eine Saugschlauchführung (24) zur Führung des Saugschlauches (22), vorzugsweise zum Ende des Lagerraumes (13) des Abfallbehälters während der Leerung des Abfallbehälters (4), einschliesst, wobei der Lagerraum (13) des Abfallbehälters fast vollständig geleert werden kann.

8. Vorrichtung nach Anspruch 4, dadurch gekennzeichnet, dass die Abfallsammeleinrichtung (6) mit einem im wesentlichen luftdichten Tank (7) und Entleerungseinrichtungen (22,26) ausgestattet ist.

9. Abfallbehälter (4), mit einer Flüssgkeitsabscheideinrichtung (12), einem Flüssigkeitsraum (64), einem Abwasserablauf (14), einem Abfallauslass (23) und einem Belüftungseinlass (27), dadurch geennzeichnet, dass der Abfallauslass (23) und der Belüftungseinlass (27) auf unterschiedlichen Seiten der Flüssigkeitsabscheideinrichtung angeordnet sind, wobei die beim Leeren der des Lagerraums (13) strömende Luft des Abfallbehälters die Flüssigkeitsabscheideinrichtung (12) reinigt.

10. Vorrichtung nach Anspruch 3 oder 4, oder ein Abfallbehälter (4) nach Anspruch 9, dadurch gekennzeichnet, dass der Lagerraum (13) des Abfallbehälters (4) mit einem Fühler (16) zur Überwachung der Auffüllung des Lagerraumes des Abfallbehälters auf einen vorbestimmten Pegel versehen ist, wobei es an sich bekannt ist, dass der Fühler vorzugsweise ein Radiosendersystem zur Information der Abfallsammeleinrichtung (6) über das Auffüllen des Abfallbehälters (4) und dessen Position aufweist.

## Revendications

1. Procédé destiné au traitement de déchets, utilisant des récipients à déchets (4) qui sont vidés à intervalles réguliers et des unités de production d'humus (8) dans lesquelles les déchets sont transférés, procédé dans lequel
- les déchets sont accumulés dans un compartiment de stockage (13) dans le récipient à déchets en les acheminant par l'intermédiaire d'un système de conduit d'écoulement (10),
- au moins une partie du fluide, tel que de l'eau, contenue dans les déchets est séparée dans le compartiment de stockage (13) du récipient à déchets en utilisant un moyen de séparation de fluide (12) afin d'acheminer le fluide jusque dans un compartiment à fluide (64), et
- le contenu du compartiment de stockage (13) du récipient à déchets est enlevé à intervalles réguliers afin d'être acheminé par l'intermédiaire d'une sortie de déchets (23) jusque dans l'unité de production d'humus (8), dans lequel, lors de la vidange, de l'air de remplacement est introduit par l'intermédiaire d'une entrée d'aération (27) dans le récipient à déchets (4),
dans lequel la décomposition des déchets commence de façon avantageuse dans le compartiment de stockage (13) du récipient à déchets, **caractérisé** en ce que la sortie de déchets (23) et l'entrée d'une aération (27) sont placées sur des côtés différents du moyen de séparation de fluide, dans lequel l'air circulant lors de la vidange du compartiment de stockage (13) du récipient à déchets nettoie le moyen de séparation de fluide (12).

2. Procédé selon la revendication 1, caractérisé en ce que le récipient à déchets (4) peut être utilisé comme unité de production d'humus (8), et l'unité de production d'humus (8) peut être utilisée comme récipient à déchets (4).

3. Appareil destiné à appliquer le procédé selon la revendication 1, lequel appareil comprend au moins un récipient à déchets (4) devant être vidé à intervalles réguliers et au moins une unité de production d'humus (8), les déchets étant agencés pour être accumulés dans le compartiment de stockage (13) du récipient à déchets, dans lequel au moins le récipient à déchets (4) comprend un moyen de séparation de fluide (12), un compartiment à fluide (64), une sortie d'égout (14), une sortie de déchets (23) et une entrée d'aération (27), et/ou l'unité de production d'humus (8) comprend un système de sortie de fluide (45) destiné à la séparation et à l'évacuation de fluide, caractérisé en ce que la sortie de déchets (23) et l'entrée d'aération (27) sont agencées de façon à être placées sur des côtés différents du moyen de séparation de fluide, dans lequel l'air circulant lors de la vidange du compartiment de stockage (13) du récipient à déchets nettoie le moyen de séparation de fluide (12).

4. Appareil selon la revendication 3, caractérisé en ce que l'appareil comprend une unité de collecte de déchets, où
- le compartiment de stockage (13) du récipient à déchets est agencé pour être vidé à intervalles réguliers dans l'unité de collecte de déchets (6), et
- l'unité de collecte de déchets (6) est agencée pour être vidée à intervalles réguliers dans l'unité de production d'humus (8).

5. Appareil selon la revendication 5, caractérisé en ce que le récipient à déchets (4), l'unité de collecte de déchets (6) et l'unité de production d'humus (8) sont agencés sous forme de constructions pratiquement hermétiques.

6. Appareil selon la revendication 3 ou 5, caractérisé en ce que le récipient à déchets (4), l'unité de collecte de déchets (6) et l'unité de production d'humus (8) sont agencés de façon à être placés à l'intérieur d'un immeuble.

7. Appareil selon l'une quelconque des revendications 3 à 6, où le récipient à déchets (4) est agencé pour être vidé par l'intermédiaire d'un tuyau souple d'aspiration (22), caractérisé en ce que le récipient à déchets (4) comprend un guide de tuyau souple d'aspiration (24) destiné à guider le tuyau souple d'aspiration (22) de préférence vers l'extrémité du compartiment de stockage (13) du récipient à déchets pendant la vidange du récipient à déchets (4), dans lequel le compartiment de stockage (13) du récipient à déchets peut être vidé de façon pratiquement complète.

8. Appareil selon la revendication 4, caractérisé en ce que l'unité de collecte de déchets (6) est munie d'une cuve pratiquement hermétique (7) et d'un moyen de vidange (22, 26) destiné à vidanger le récipient à déchets par aspiration.

9. Récipient à déchets (4), qui comprend un moyen de séparation de fluide (12), un compartiment à fluide (64), une sortie d'égout (14), une sortie de déchets (23) et une entrée d'aération (27), caractérisé en ce que la sortie de déchets (23) et l'entrée d'aération (27) sont agencées de façon à être placées sur des côtés différents du moyen de séparation de fluide, où l'air circulant lors de la vidange du compartiment de stockage (13) du récipient à déchets nettoie le moyen de séparation de fluide (12).

10. Appareil selon la revendication 3 ou 4, ou bien récipient à déchets (4) selon la revendication 9, caractérisé en ce que le compartiment de stockage (13) du récipient à déchets (4) est muni d'un capteur (16) destiné à surveiller le remplissage du compartiment de stockage du récipient à déchets jusqu'à un niveau prédéterminé, dans lequel cela est su dans la mesure où le capteur est équipé de préférence d'un système d'émetteur radio afin d'informer l'unité de collecte de déchets (6) du remplissage du récipient à déchets (4) et de l'emplacement du récipient à déchets (4).
